## Europäisches Patentamt

## European Patent Office

## Office européen des brevets

(11) Veröffentlichungsnummer: **0 135 648**
**B1**

(12) **EUROPÄISCHE PATENTSCHRIFT**

(45) Veröffentlichungstag der Patentschrift:
12.07.89

(21) Anmeldenummer: **84100606.3**

(22) Anmeldetag: **26.01.84**

(51) Int. Cl.⁴: **F 16 F  1/36,** B 60 K 5/12,
B 29 C 65/00

(54) Verfahren zur Herstellung einer Federkupplung.

(30) Priorität: 24.09.83 DE 3334630

(43) Veröffentlichungstag der Anmeldung:
03.04.85 Patentblatt 85/14

(45) Bekanntmachung des Hinweises auf die Patenterteilung:
12.07.89 Patentblatt 89/28

(84) Benannte Vertragsstaaten:
DE FR GB IT SE

(56) Entgegenhaltungen:
DE-A-2 618 333
FR-A-2 090 092
GB-A-616 987
GB-A-2 069 095
US-A-1 842 582
US-A-3 823 619

(73) Patentinhaber: **Firma Carl Freudenberg, Höhnerweg
4, D-6940 Weinheim/Bergstrasse (DE)**

(72) Erfinder: **Jörg, Benno Michael, Am drachenstein
27, D-6940 Weinheim (DE)**
Erfinder: **Kurr, Klaus, Dr., Brunnengasse 9, D-6940
Weinheim- Hohensachsen (DE)**
Erfinder: **Schäfer, Georg, Beundweg 22, D-6940
Weinheim (DE)**
Erfinder: **Seifert, Heinz, Haupstrasse 99, D-6941
Laudenbach (DE)**

(74) Vertreter: **Weissenfeld- Richters, Helga, Dr.,
Höhnerweg 2, D-6940 Weinheim/Bergstrasse (DE)**

## Beschreibung

Die Erfindung betrifft ein Verfahren zur Herstellung einer Federkupplung, bei dem ein polymerer Federwerkstoff in den Spalt zwischen zwei Maschinenteilen eingebracht und nach einer zeitweiligen Erweichung zu einem Federkörper verfestigt und mit den Maschinenteilen verbunden wird, wobei wenigstens eines der beiden Maschinenteile vor der Einbringung des Federwerkstoffes in wenigstens einem den Spalt begrenzenden Teilbereich seiner Oberfläche abgedeckt wird, um eine Anbindung des Federwerkstoffes in diesem Teilbereich zu verhindern.

Ein solches Verfahren ist in bezug auf die Herstellung eines Drehschwingungsdämpfers aus der GB-A-2 069 095 bekannt. Der Teilbereich wird dabei mit einem festen Körper aus einem Tiefpunktlot abgedeckt, das im Anschluß an die Anformung und Vulkanisierung des aus Gummi bestehenden Federkörpers ausgeschmolzen und entfernt wird. Diese Art der Durchführung des Verfahrens ist relativ aufwendig. Auch wird die unzureichende Führung des Schwungringes auf dem Nabenring beanstandet.

Der Erfindung liegt die Aufgabe zugrunde, das vorstehend angesprochene Verfahren derart weiterzuentwickeln, daß sich bei der Fertigung ähnlicher Teile eine Senkung der Herstellkosten ergibt.

Diese Aufgabe wird erfindungsgemäß bei einem Verfahren der eingangs genannten Art dadurch gelöst, daß zur Abdeckung des Teilbereiches ein filmartig verteiltes Trennmittel verwendet wird, um eine Angleichung der Gestalt des Federkörpers an die Gestalt des Teilbereiches zu erhalten.

Bei dem erfindungsgemäßen Verfahren dient somit das relativ bewegliche Maschinenteil zunächst als Formwerkzeug für die Herstellung des Federkörpers Durch die eine Anbindung des Federwerkstoffes verhindernde Ausrüstung des Teilbereiches mit einem filmartig verteilten Trennmittel wird indessen nicht eine durchgehende Bindung erhalten, sondern in dem Teilbereich eine von dem Federkörper weitgehend unabhängige Beweglichkeit Der Federkörper kann dadurch bei relativen Verlagerungen des abgestützten Maschinenteiles zumindest in bezug auf parallel zu der Erstreckung des Teilbereiches eingeleitete Bewegungen gut zu dessen Führung dienen. Die Anbindung des relativ beweglichen Maschinenteiles durch die Haftbereiche bedingt ebenfalls ein Führungsmoment. Dieses ist von dem vorstehend angesprochenen unabhängig und kann sich senkrecht zu diesem erstrecken. Die Haftbereiche können sich in beiden Fällen parallel oder quer zur Richtung der eingeleiteten Bewegungen erstrecken, wobei Abweichungen von ± 30 Grad ohne wesentliche Bedeutung sind. Die mit dem filmartig verteilten Trennmittel versehenen Teilbereiche können sich beliebig zur Richtung der eingeleiteten Bewegungen erstrecken.

Bei einer parallelen Zuordnung kann sich eine weitere Nacharbeit erübrigen, insofern, als das relativ bewegte Maschinenteil unmittelbar durch die nicht angebundenen Bestandteile der Oberfläche des Federkörpers abgestützt und geführt wird. Eine Modifizierung der relativen Beweglichkeit läßt sich dabei erreichen, wenn der Federwerkstoff nach seiner Verfestigung geschrumpft und/oder verformt wird, um einen Zwischenraum in dem dem Teilbereich gegenüberliegenden Bereich zu erhalten. Der Zwischenraum hat im Regelfalle nur eine relativ geringe Breite, so daß die erwünschte Führung des relativ bewegten Maschinenteiles weiterhin erhalten bleibt. Er verhindert indessen eine gegenseitige Berührung zwischen beiden Teilen, wodurch Haftreibungsprobleme nicht mehr auftreten. Die exakte Dimensionierung bleibt dem Einzelfalle vorbehalten und es ist selbstverständlich möglich, anstelle einer Schrumpfung und /oder nachträglichen Verformung des Federwerkstoffes eine entsprechende Verformung des Maschinenteiles vorzunehmen.

Nach einer vorteilhaften Ausgestaltung ist es vorgesehen, daß der Spalt oder Abstand nach dem Schrumpfen des Federwerkstoffes und/oder der Verformung des Maschinenteiles mit einem schmierend wirkenden Stoff und/oder einer viskosen Flüssigkeit und/oder einem druckbeaufschlagten Medium gefüllt wird. Die relative Beweglichkeit zwischen den aneinander angrenzenden Teilen läßt sich hierdurch weiter modifizieren. Die letztgenannte Ausführungsform des Verfahrens setzt voraus, daß die die Anbindung des Federwerkstoffes unterbindende Ausrüstung in vollständig von Haftmassebereichen umschlossenen Teilbereichen der Oberfläche des Maschinenteiles vorgenommen wird.

In Fällen, in denen das relativ bewegliche Maschinenteil quer zur Erstreckung der haftungsunterbindend ausgerüsteten Teilbereiche seiner Oberfläche beweglich ist, werden die für eine entsprechende Beweglichkeit erforderlichen Freiräume zwischen der Stirnfläche des Federkörpers und des relativ beweglichen Maschinenteiles erhalten durch eine nachträgliche Verformung des Maschinenteiles in diesem Teilbereich und/oder des Federkörpers. Letzterer bildet dann eine Art Pendelstütze zwischen den einander gegenüberliegenden Haftflächen. Sekundäre Führungselemente werden daher trotz einer außerordentlich stark vereinfachten Herstellbarkeit nicht mehr benötigt.

Das vorgeschlagene Verfahren wird nachfolgend anhand der in der Anlage beigefügten Zeichnung weiter verdeutlicht. Es zeigen:

Figur 1   ein Motorlager in halbgeschnittener Darstellung

Figur 2   einen Drehschwingungsdämpfer in halbgeschnittener Darstellung.

Figur 3   einen Längsschwingungsdämpfer in längsgeschnittener Darstellung.

Bei dem zur Herstellung des Motorlagers nach

2

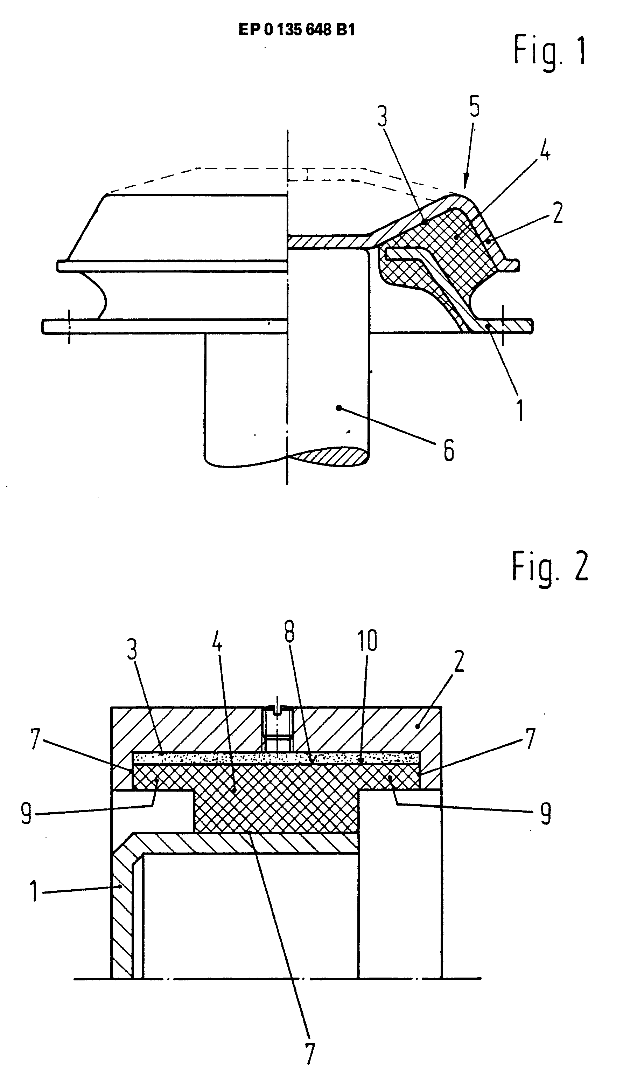

Figur 1 angewendeten Verfahren werden zwei Maschinenteile 1, 2 verwendet und in ein nicht dargestelltes Formwerkzeug eingelegt, das alle schraffierten Bereiche vollständig umschließt. Das Maschinenteil 2 ist in dem mit 3 bezeichneten Teilbereich mit einem Trennmittel beschichtet, das eine Anbindung des polymeren Federwerkstoffes während dessen Verfestigung verhindert. Die übrigen Bereiche der Maschinenteile sind demgegenüber mit einem Haftvermittler behandelt. Hier kommt es im Gegensatz zu dem Bereich 3 zu einer guten Anbindung des Federwerkstoffes. Dieser wird gleichzeitig mit den Maschinenteilen oder im Anschluß daran in den Hohlraum eingebracht und nach einer zumindest zeitweiligen Erweichung verfestigt. Das Motorlager kann danach in der dargestellten Form aus dem Werkzeug entnommen werden und in ein anderes Werkzeug überführt werden. In diesem wird das äußere Maschinenteil 2 im Bereich seines Außenumfanges axial festgelegt, etwa im Bereich der umlaufenden Kante 5, und von der entgegengesetzten Seite mittig belastet, beispielsweise durch den mit 6 bezeichneten Prägestempel. Der mittige Teil des oberen Maschinenteiles 2 wird hierdurch axial verformt und bleibend in die gestrichelt dargestellte Gestalt überführt, wobei sich im Bereich der mit Trennmittel beschichteten Zone 3 ein axialer Abstand zu dem Federkörper ergibt. Das obere Maschinenteil 2 kann dadurch axial einfedern. Das erhaltene Teil ist unmittelbar verwendungsfähig und kann seiner Bestimmung zugeführt werden. Die festen Teile von Hydrolagern für Verbrennungsmotoren lassen sich auf die gleiche Weise erzeugen.

Der Drehschwingungsdämpfer nach Figur 2 läßt sich auf die gleiche Weise erhalten. Auch in diesem Falle werden zwei vorbereitete Maschinenteile 1, 2 in ein die schraffierten Bereiche umschließendes Formwerkzeug eingesetzt, von denen das Teil 2 in dem mit 3 bezeichneten Teilbereich seiner Oberfläche mit einem Trennmittel beschichtet ist. Beide Maschinenteile haben eine rotationssymmetrische Gestalt.

Der verbleibende Hohlraum des Formwerkzeuges wird mit einem polymeren Federwerkstoff 4 ausgefüllt, der nach vorübergehender Verflüssigung verfestigt und im Bereich der Haftflächen 7 an die angrenzenden Maschinenteile 1, 2 anvulkanisiert wird. Die Drehbewegung zwischen den Teilen 1, 2 wird ausschließlich über die Haftflächen 7 übertragen. Die äußere Begrenzungsfläche 8 des Federkörpers 4 ist hiervon im wesentlichen unberührt. Ihre Zuordnung zu der mit Trennmittel beschichteten Fläche 3 des äußeren Maschinenteiles 2 bleibt dadurch im wesentlichen unverändert erhalten. Eine gute radiale Abstützung des äußeren Maschinenteiles 2 auf dem inneren Maschinenteil 1 ist hiervon die Folge. Zugleich ergibt sich eine ausgezeichnete Abstützung des äußeren Maschinenteiles 2 auf dem inneren Maschinenteil 1 in axialer Richtung durch die sich im wesentlichen nur in axialer Richtung erstreckenden Vorsprünge 9, die eine pendelstützenähnliche Wirksamkeit haben.

Die Flächen 3 und 8 haben, bedingt durch den unterschiedlichen thermischen Schrumpf des verwendeten elastomeren Werkstoffes 4 und des äußeren Maschinenteiles, einen radialen Abstand voneinander. In den durch den Abstand gebildeten Zwischenraum 10 wird Silikonöl zur Verbesserung der Dämpfungseigenschaften eingepreßt. Der Abstand beeinträchtigt die radiale Führung der beiden Maschinenteile aufeinander nicht in nennenswertem Maße.

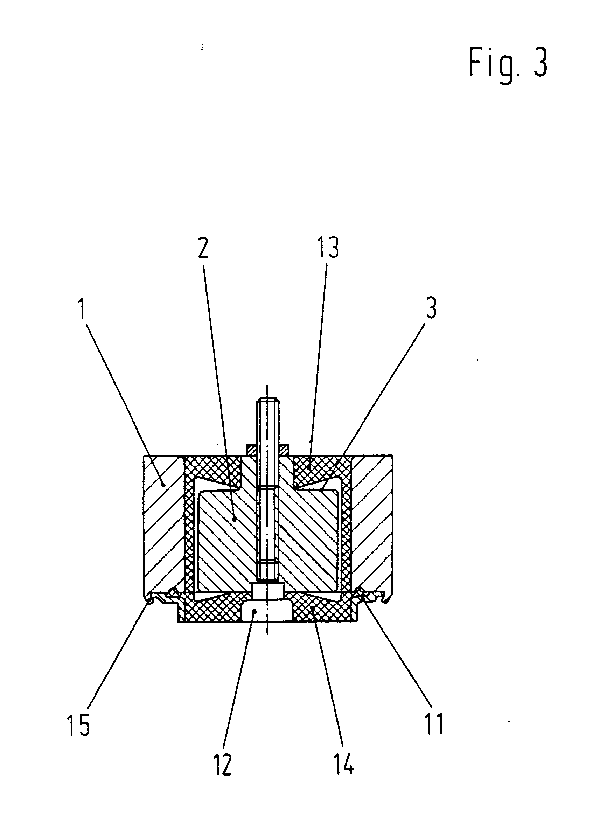

Bei der Herstellung des Längsschwingungsdämpfers nach Figur 3 werden im wesentlichen die selben Arbeitsschritte angewendet, wie vorstehend geschildert. Die Herstellung erfolgt jedoch in drei aufeinanderfolgenden Schritten.

Im ersten Arbeitsschritt werden die Teile 1 und 2 derart axial verlagert in ein Formwerkzeug eingelegt, daß die Stirnfläche des mit einem Trennmittel beschichteten Teilbereiches 3 bündig an der zugeordneten Stirnfläche des später gebildeten Federkörpers 13 anliegt. Dieser kann dadurch weder in diesem Bereich noch im Bereich seines Außenumfanges in eine Bindung zu dem Federkörper treten. Er wird von dem Werkstoff des Federkörpers jedoch allseitig umschlossen. Eine metallische Berührung zwischen den beiden Maschinenteilen 1, 2 ist hierdurch völlig ausgeschlossen.

Im zweiten Schritt werden die Teile 11, 12 in einer entsprechenden gegenseitigen axialen Verlagerung in ein Formwerkzeug eingebracht und durch einen kreisringförmig begrenzten Federring 14 aus polymerem Werkstoff verbunden, beispielsweise aus Gummi.

Im dritten Schritt werden die Maschinenteile 2 und 12 verschraubt, wobei sich die gezeigte axiale Verlagerung zwischen ihnen und dem Maschinenteil 1 ergibt. Das durch eine Tilgermasse gebildete Maschinenteil 2 nimmt somit eine mittlere axiale Stellung zwischen den beiderseitige Anschläge bildenden Ansätzen 13, 14 ein. Es ist aus der mittleren Lage beiderseits beweglich.

Zur Sicherung der gegenseitigen Verbindung zwischen sämtlichen Teilen kann anschließend noch der äußere Rand 15 des Maschinenteiles 1 nach innen umgebördelt und in eine feste Anlage an den Außenumfang des Maschinenteiles 11 gebracht werden Die Verschraubung der Maschinenteile 12 und 2 ist hierdurch unlösbar gesichert.

**Patentansprüche**

1. Verfahren zur Herstellung einer Federkupplung, bei dem ein polymerer Federwerkstoff (4) in den Spalt zwischen zwei Maschinenteilen (1, 2) eingebracht und nach einer zeitweiligen Erweichung zu einem Federkörper verfestigt und mit den Maschinenteilen (1, 2) verbunden wird, wobei wenigstens eines der beiden Maschinenteile (1, 2) vor der Einbringung des Federwerkstoffes (4) in wenigstens einem den Spalt begrenzenden Teilbereich (3) seiner Oberfläche abgedeckt wird, um eine Anbindung des Federwerkstoffes (4) in diesem Teilbereich (3) zu verhindern, dadurch gekennzeichnet, daß zur Abdeckung des Teilbereiches (3) ein filmartig verteiltes Trennmittel verwendet wird, um eine Angleichung der Gestalt des Federkörpers an die Gestalt des Teilbereiches (3) zu erhalten.

2. Verfahren nach Anspruch 1, dadurch gekennzeichnet, daß das Trennmittel in von Haftbereichen umschlossenen Teilbereichen aufgetragen wird.

3. Verfahren nach Anspruch 1 bis 2, dadurch gekennzeichnet, daß der Federkörper nach seiner Verfestigung geschrumpft und/oder verformt wird, um einen Zwischenraum (10) in dem dem Teilbereich gegenüberliegenden Bereich zu erhalten.

4. Verfahren nach einem der Ansprüche 1 bis 3, dadurch gekennzeichnet, daß das Maschinenteil nach der Verfestigung des Federkörpers verformt wird um einen Zwischenraum (10) zwischen dem Teilbereich (3) und dem Federkörper zu erhalten.

5. Verfahren nach Anspruch 3 oder 4, dadurch gekennzeichnet, daß der Zwischenraum (10) nach dem Schrumpfen des Federwerkstoffes (4) und/oder der Verformung des Maschinenteiles (2) mit einem schmierend wirkenden Stoff und/oder einer viskosen Flüssigkeit und/oder einem druckbeaufschlagten Medium gefüllt wird.

## Claims

1. A process for making a spring coupling, in which a polymeric spring material (4) is introduced into the gap between two machine parts (1, 2) and, after softening for a time, is made to set into a spring body and is bonded to the machine parts (1, 2), at least one of the two machine parts (1, 2) being covered before introduction of the spring material (4) in at least a zone (3) of its surface limiting the gap, in order to prevent an attachment of the spring material (4) in this zone (3), characterized in that a release agent distributed like a film is used for covering the zone (3), in order to obtain an assimilation of the shape of the spring body to the shape of the zone (3)

2. A process according to claim 1, characterized in that the release agent is applied in zones enclosed by bonding areas.

3. A process according to either of claims 1 or 2, characterized in that, after its setting, the spring body is shrunk and/or deformed in order to obtain an intermediate space (10) in the region opposite the zone.

4. A Process according to any of claims 1 to 3, characterized in that, after the setting of the spring body, the machine part is deformed in order to obtain an intermediate space (10) between the zone (3) and the spring body.

5. A process as claimed in either of claims 3 or 4, characterized in that, after the shrinking of the spring material (4) and/or the deformation of the machine part (2), the intermediate space (10) is filled with a lubricating substance and/or a viscous liquid and/or a pressurized medium.

## Revendications

1. Procédé pour la fabrication d'un accouplement élastique dans lequel un matériau élastique polymère (4) est introduit dans le jeu entre deux pièces de machine (1, 2) et subit un durcissement après un ramollissement temporaire, pour donner un corps élastique et est lié aux pièces de machine (1, 2) tandis qu'au moins l'une des deux pièces de machine (1, 2) reçoit un recouvrement avant l'introduction du corps élastique (4) sur au moins une zone partielle (3) de sa surface limitant le jeu, afin d'empêcher une liaison du corps élastique (4) avec cette zone partielle (3), caractérisé en ce que le recouvrement de la zone partielle (3) est assuré par un agent de séparation réparti sous forme de film, afin d'obtenir une adaptation de la forme du corps élastique à la forme de la zone partielle (3).

2. Procédé selon la revendication 1, caractérisé en ce que l'agent de séparation est appliqué sur des zones partielles entourant les zones d'adhérence.

3. Procédé selon les revendications 1 et 2, caractérisé en ce que le corps élastique subit une contraction et/ou une déformation après son durcissement, afin d'obtenir un interstice (10) dans la zone opposée à la zone partielle.

4. Procédé selon l'une des revendications 1 à 3, caractérisé en ce que la pièce de machine est déformée après le durcissement du corps élastique, afin d'obtenir un interstice (10) entre la zone partielle (3) et le corps élastique.

5. Procédé selon la revendication 3 ou 4, caractérisé en ce que l'interstice (10) est rempli, après la contraction du corps élastique (4) et/ou la déformation de la pièce de machine (2) avec une substance lubrifiante et/ou un liquide visqueux et/ou un fluide soumis à pression.

Fig. 1

Fig. 2

Fig. 3